# DEMANDE DE BREVET EUROPEEN

(11) **EP 4 620 652 A1**
(43) Date de publication de la demande: **24.09.2025**
(21) Numéro de dépôt: 25162360.9
(22) Date de dépôt: 07.03.2025
(51) Int. Cl.: B29C 49/42, B29C 49/78, B29C 49/06, B29K 67/00, B29L 31/00

(54) **PROCÉDÉ DE RÉGULATION D'UNE INSTALLATION DE PRODUCTION DE RÉCIPIENTS**

(30) Priorité: 21.03.2024 FR 2402808
(71) Demandeur: Sidel Participations, 76930 Octeville-sur-Mer (FR)
(72) Inventeur: PROTAIS, Pierrick, 76930 OCTEVILLE-SUR-MER (FR)
(74) Mandataire: Sidel Group

(57) **Abrégé**

La présente invention concerne un procédé pour fabriquer des récipients en matières thermoplastiques par moulage avec soufflage ou étirage-soufflage d'un corps creux préalablement chauffé dans un four puis disposé dans un moule, les étapes de chauffage des corps creux, de pré-soufflage et de soufflage étant pilotées par une unité de contrôle à partir de différents paramètres dits de pilotage ; ledit procédé est remarquable en ce qu'il comprend une étape préalable dite d'étalonnage qui comporte au moins les étapes suivantes de : production de récipients à partir de premiers paramètres de pilotage ; de mesure de l'épaisseur de la paroi desdits récipients à la sortie du moule, à au moins deux hauteurs différentes ; d'enregistrement de ladite épaisseur de référence dans une unité de mémoire ; de modification d'au moins un paramètre de pilotage ; de mesure de l'épaisseur de la paroi desdits récipients à la sortie du moule, à au moins deux hauteurs différentes, après la modification de chaque paramètre de pilotage ; d'enregistrement des épaisseurs ; de comparaison desdites épaisseurs mesurées enregistrées avec les épaisseurs théoriques qu'on aurait dû obtenir après modifications du ou desdits paramètres en suivant les coefficients de correction pré-déterminés ; et finalement de modification des coefficients de correction prédéterminés de telle sorte que les épaisseurs mesurées après modification du ou des paramètres de pilotage correspondent aux épaisseurs théoriques que l'on aurait dû obtenir avec les coefficient pré-déterminés précédents.

## Description

### Domaine technique

La présente invention concerne le domaine de la fabrication de récipients, telles que des bouteilles ou flacons par exemple, par soufflage ou étirage-soufflage à partir de corps creux en matériau thermoplastique, telle que par exemple le polyéthylène téréphtalate dit « PET ». Elle a pour objet un procédé de moulage par soufflage ou soufflage étirage de récipients à partir de corps creux et une installation mettant en œuvre un tel procédé.

### Etat de la technique

Dans le domaine de la fabrication de tels récipients, il est bien connu que ces derniers sont fabriqués à travers une installation comprenant au moins une unité de chauffage et une unité de formage équipée d'une succession de moules à l'empreinte du modèle de récipient à former et de dispositifs d'injection correspondant.

Plus précisément, la fabrication de ces récipients comporte deux phases principales, à savoir une première phase dite de chauffe des corps creux, au cours de laquelle une succession de corps creux est chauffée dans l'unité de chauffage à une température de référence à laquelle les corps creux sont dans un état malléable dans lequel elles peuvent être formées, et une seconde phase dite de formage, au cours de laquelle les corps creux chauffés sont transférés chacun dans un moule de l'unité de soufflage et un fluide sous pression est injecté dans chaque corps creux par le dispositif d'injection aussi appelé tuyère correspondant pour conférer à la préforme la forme finale du récipient. Le fluide sous pression est usuellement un gaz, tel que de l'air. Par ailleurs, le formage inclut généralement une phase d'étirage réalisée au moyen d'une tige d'étirage mobile agencée pour appliquer une force d'étirage sur le fond d'un corps creux dans un moule afin d'étirer la préforme selon son axe, ce qui contribue à maintenir la préforme centrée par rapport au moule.

De plus, une installation de production de ces récipients comprend généralement une console de commande à partir de laquelle de nombreux paramètres peuvent être ajustés manuellement par un opérateur pour piloter l'unité de chauffage et/ou l'unité de formage. S'agissant de l'unité de chauffe, lesdits paramètres consistent, par exemple, en la puissance de chauffe, le temps de chauffe par zone au moyen de la sélection allumée ou éteinte de chaque émetteur, la puissance d'une ventilation assurant le transfert des calories apportées sur la peau externe du corps creux vers l'intérieur de ledit corps creux ; le profil de température de la chauffe préférentielle, etc. Concernant l'unité de formage, lesdits paramètres consistent, par exemple, en la pression de pré-soufflage, le départ du pré-soufflage, le débit de pré-soufflage, la vitesse de l'étirage, la pression de soufflage, etc.

Le procédé de fabrication nécessite de nombreux essais préliminaires avant l'obtention d'un récipient jugé conforme, c'est-à-dire d'un récipient qui respecte l'ensemble des critères de qualité définis préalablement par un cahier des charges. L'opération est fastidieuse et longue à mettre en œuvre, car il est indispensable d'ajuster chacun des paramètres de l'installation et du procédé afin de garantir la conformité du récipient. En outre, cette étape préliminaire doit être réalisée pour chaque format de récipient et/ou pour chaque changement de préforme et/ou pour chaque changement de référence matière. Le format d'un récipient peut notamment être défini par la hauteur et/ou la forme et/ou le volume de ce dernier.

La mise au point du procédé de fabrication et le paramétrage de l'installation associée nécessite donc la présence d'un opérateur ayant une bonne connaissance de l'installation, du procédé, et des modèles de corps creux susceptibles d'être introduites dans l'installation afin d'obtenir un récipient conforme au format souhaité. Cette mise au point nécessite également un temps important, qui impacte directement le volume de production de la ligne.

Le récipient obtenu sera ensuite évalué pour déterminer s'il satisfait ou non aux critères, et ceci tout au long de la phase de production. Par exemple, un critère de qualité pour juger de la conformité d'un récipient peut être la répartition de la matière le long de la hauteur du récipient, pour un format déterminé. De manière connue, un des paramètres du procédé de fabrication qui impacte ce critère est le conditionnement thermique des corps creux, lors du passage des corps creux dans l'unité de chauffage.

Si ce critère de répartition de la matière dérive et n'est plus jugé conforme, l'opérateur doit ajuster différents paramètres afin de corriger le défaut, soit durant la phase de conditionnement thermique, soit durant la phase de formage, ou les deux. En outre, les modifications effectuées ne doivent pas conduire à l'apparition d'autres défauts ou problèmes.

A cet égard, afin de pallier cet inconvénient, on a déjà imaginé un procédé de régulation des paramètres de chauffage du four, notamment de régulation des variations de la puissance électrique des sources de rayonnement, en fonction de l'épaisseur de la paroi du récipient formé. C'est notamment le cas du brevet Européen EP1998950.

Le document EP1998950 propose une solution consistant à contrôler le critère de répartition de la matière à l'aide de capteurs d'épaisseur situés les uns au-dessus des autres. Si ce critère est jugé non conforme, la puissance de la lampe de chauffe située à la même hauteur qu'un capteur sera modifiée en conséquence. Les autres lampes ne sont pas concernées et leur réglage n'est pas rectifié. Ainsi, le conditionnement thermique du corps creux n'est donc pas totalement maîtrisé.

Par ailleurs, cette modification des paramètres de chauffage du four va entraîner une modification du conditionnement thermique du corps creux pendant la production et ainsi engendrer une non-conformité du récipient formé vis-à-vis du cahier des charge du client. Par ailleurs, la non-conformité du récipient formé grève les coûts de fabrication et peut nécessiter l'arrêt de l'installation grevant encore plus les coûts de fabrication.

On connait également le document EP2352633 qui décrit un procédé et un appareil pour le moulage par soufflage de récipients. Un corps creux faite d'un matériau thermoplastique est d'abord soumis à un traitement thermique dans la zone d'une section de chauffage le long d'un chemin de transport. La préforme est ensuite façonnée en récipient à l'intérieur d'un moule de soufflage sous l'effet d'une pression de soufflage. Une fois le récipient moulé par soufflage, une épaisseur de paroi est mesurée sur au moins un niveau vertical du récipient. Une valeur prédéfinie pour l'épaisseur de la paroi est transmise à un contrôleur en tant que valeur souhaitée, et l'épaisseur de la paroi mesurée est transmise à celui-ci en tant que valeur réelle. Le contrôleur prédéfinit la quantité d'au moins un paramètre influençant le processus de soufflage en fonction d'une différence entre la valeur souhaitée et la valeur réelle. Plus précisément, le contrôleur prédéfinit la quantité d'au moins un paramètre influençant l'alimentation en gaz de soufflage. La quantité du paramètre est prédéfinie sur la base d'un modèle de simulation du processus de soufflage mis en œuvre dans le contrôleur.

Toutes ces solutions sont insuffisantes car elles ne permettent pas à l'opérateur d'optimiser la phase de chauffe de manière directe et rapide. Les informations à sa disposition ne permettent pas une correction du défaut tout en évitant de faire apparaître d'autres problèmes, par exemple à d'autres niveaux de hauteur du récipient. Par ailleurs, chaque process a des paramètres qui lui sont propres. Ainsi, une variation de la valeur d'un paramètre engendre une variation d'épaisseur différentes des récipients pour chaque process de sorte que, en cas de déviation des épaisseurs bouteille, il est difficile de prévoir quelle variation de quel paramètre va permettre de retrouver des valeurs cibles d'épaisseur des récipients.

### Divulgation de l'invention

L'un des buts de l'invention est donc de remédier à ces inconvénients en proposant un procédé permettant de modifier le conditionnement thermique des corps creux et/ou les paramètres de formage des récipients en fonction de chaque process de fabrication.

A cet effet, et conformément à l'invention, il est proposé un procédé pour fabriquer des récipients en matières thermoplastiques par moulage avec soufflage ou étirage-soufflage d'un corps creux préalablement chauffé dans un four puis disposé dans un moule constitué de deux demi-moules délimitant une cavité de moulage, ledit corps creux étant soufflé dans le moule, avec éventuellement une étape de pré-soufflage, lesdites étapes de chauffage des corps creux, de pré-soufflage et de soufflage étant pilotées par une unité de contrôle à partir de différents paramètres dits de pilotage tels que la température de chauffe des corps creux dans le four, la pression de soufflage dans le moule et/ou la pression de pré-soufflage et/ou le débit de pré-soufflage et/ou la vitesse de la tige d'étirage par exemple ; ledit procédé est remarquable en ce qu'il comprend une étape préalable dite d'étalonnage qui comporte au moins les étapes suivantes de :
- production de récipients à partir de premiers paramètres de pilotage pour produire des récipients dits conformes ;
- mesure de l'épaisseur de la paroi desdits récipients à la sortie du moule, à au moins deux hauteurs différentes, correspondant à la production de récipients à partir desdits premiers paramètres de pilotage, ladite mesure de l'épaisseur correspondant à une épaisseur de référence ;
- enregistrement de ladite épaisseur de référence dans une unité de mémoire ;
- modification d'au moins un paramètre de pilotage ;
- mesure de l'épaisseur de la paroi desdits récipients à la sortie du moule, à au moins deux hauteurs différentes, après la modification du ou desdits paramètres de pilotage ;
- enregistrement des épaisseurs de la paroi desdits récipients à la sortie du moule pour chaque paramètre de pilotage modifié dans ladite unité de mémoire ;
- comparaison desdites épaisseurs mesurées enregistrées avec les épaisseurs obtenues sans modification du ou desdits paramètres ;
- détermination d'un coefficient de correction, pour une épaisseur à une hauteur déterminée, de chaque paramètre, ledit coefficient de correction procurant la variation d'épaisseur correspondant à l'épaisseur souhaitée de la paroi du récipient à la hauteur déterminée.

De préférence, l'étape préalable d'étalonnage comporte au moins les étapes suivantes de :
- production de récipients à partir de premiers paramètres de pilotage pour produire des récipients conformes ;
- mesure de l'épaisseur de la paroi desdits récipients à la sortie du moule, à au moins deux hauteurs différentes, correspondant à la production de récipients à partir desdits premiers paramètres de pilotage, ladite mesure de l'épaisseur correspondant à une épaisseur de référence ;
- enregistrement de ladite épaisseur de référence dans une unité de mémoire ;
- modification d'au moins un paramètre de pilotage, ladite modification étant réalisée à partir d'un coefficient de correction prédéterminé associé audit paramètre de pilotage ;
- mesure de l'épaisseur de la paroi desdits récipients à la sortie du moule, à au moins deux hauteurs différentes, après la modification du ou desdits paramètre de pilotage ;
- enregistrement des épaisseurs de la paroi desdits récipients à la sortie du moule pour chaque paramètre modifié de pilotage modifié dans ladite unité de mémoire ;
- comparaison desdites épaisseurs mesurées enregistrées avec les épaisseurs théoriques qu'on aurait dû obtenir après modifications du ou desdits paramètres en suivant les coefficients de correction pré-déterminés ;
- modification des coefficients de correction prédéterminés de telle sorte que les épaisseurs mesurées après modification du ou des paramètres de pilotage correspondent aux épaisseurs théoriques que l'on aurait dû obtenir avec les coefficient pré-déterminés précédents.

On comprend bien que, pour chaque process, à la première mise en route, on met l'installation de formage de récipients en production avec un process spécifique validé, puis on modifie automatiquement légèrement chaque paramètre du process et on enregistre les épaisseurs qui en résultent. On peut ainsi personnaliser l'algorithme de pilotage de l'installation pour chaque process et, ainsi, en cas de déviation d'une ou plusieurs épaisseurs, l'algorithme pourra choisir de manière optimale le ou les paramètres à modifier et la valeur des coefficients correcteur associés à chaque paramètre de pilotage pour retrouver des épaisseurs dans les spécifications du process de fabrication des récipients.

Après l'étape préalable dite d'étalonnage, il comporte au moins les étapes suivantes de :
a) mesure de l'épaisseur de la paroi desdits récipients à la sortie du moule, à au moins deux hauteurs différentes ;
b) comparaison des mesures des épaisseurs avec des valeurs de consigne déterminées pour chaque hauteur des récipients ;
c) si l'écart des mesures des épaisseurs avec les valeurs de consigne déterminées est supérieur à un seuil déterminé, modification d'au moins un des paramètres de pilotage, le ou lesdits paramètres de pilotage modifié(s) et leurs coefficients correcteurs associés étant sélectionné(s) parmi au moins un des paramètres de pilotage procurant la
   variation d'épaisseur de la paroi des récipients la plus pertinente vis-à-vis de l'écart d'épaisseur mesuré lors de l'étape d'étalonnage et/ou en calculant les effets théoriques de la variation pour chaque paramètre sur les épaisseurs, lesdits effets théoriques de la
   variation pour chaque paramètre définissant une épaisseur théorique, puis en sélectionnant le ou les paramètres induisant le plus petit écart entre les valeurs mesurées et les valeurs théoriques d'épaisseurs ;
d) les étapes a) à c) sont répétées jusqu'à ce que les écarts des mesures des épaisseurs avec les valeurs de consigne déterminées soient inférieurs audit seuil déterminé.

De préférence, l'étape c) comprend au moins les étapes suivantes de :
- définition, pour chaque paramètre, d'un coefficient de référence optimal choisi parmi des coefficients de références attribués à chaque zone d'épaisseur de la paroi des récipients ;
- mémorisation des limites inférieure et supérieure ainsi que des échelles pour chacun desdits paramètres ;
- calcul d'un ajustement de chaque paramètre en fonction dudit coefficient de référence optimal préalablement défini ;
- calcul des corrections théoriques pour chaque zone d'épaisseur en fonction des ajustements calculés et des échelles ;
- calcul de l'écart théorique d'épaisseur des récipients en fonction des corrections théoriques calculées pour chaque zone d'épaisseur ;
- addition, pour chaque paramètre, desdits écarts théoriques calculés ; et
- sélection d'au moins un paramètre présentant les valeurs d'écart cumulées les plus faibles.

Par ailleurs, préalablement à l'étape de sélection d'au moins un paramètre, il comporte une étape de hiérarchisation des paramètres en fonction desdits écarts théoriques calculés.

Lesdits paramètres sont hiérarchisés de manière croissante, de la valeur d'écart cumulé la plus faible à la valeur d'écart cumulé la plus grande.

De préférence, après l'étape de calcul des ajustements et préalablement à l'étape de calcul des corrections théoriques, il comporte une étape additionnelle de recalcul des ajustements si les ajustements calculés ne sont pas dans lesdites limites.

Par ailleurs, lesdites corrections théoriques calculées nulles sont exclues.

De plus, l'addition des écarts théoriques calculés est réalisée en valeur absolue.

De préférence, l'étape de sélection du paramètre est réalisée après le calcul d'une nouvelle moyenne des épaisseurs pour chaque zone et/ou que la combinaison des écarts pour chaque zone d'épaisseur a changé.

Par ailleurs, une nouvelle moyenne des épaisseurs pour chaque zone est calculée à une fréquence prédéterminée.

De manière avantageuse, le procédé suivant l'invention comporte une étape de modification des coefficients de correction prédéterminés de l'algorithme pour que les épaisseurs mesurées après modification du ou des paramètres de pilotage correspondent aux épaisseurs théoriques que l'on aurait dû obtenir avec les coefficients pré-déterminés précédents.

Selon une première variante d'exécution, lors de ladite étape d'étalonnage, chaque paramètre de pilotage est modifié un par un.

Selon une seconde variante d'exécution, lors de ladite étape d'étalonnage, chaque paramètre de pilotage est modifié simultanément avec au moins un autre paramètre de pilotage.

Par ailleurs, lors de ladite étape d'étalonnage, chaque paramètre de pilotage est modifié suivant une valeur incrémentale ou décrémentale prédéterminée.

Un autre objet de l'invention concerne un produit programme d'ordinateur comprenant une séquence d'instructions qui, lorsque le programme est exécuté par un ordinateur, conduit celui-ci à mettre en œuvre les étapes du procédé suivant l'invention.

Un troisième objet de l'invention concerne un dispositif de traitement de données comprenant des moyens de mettre en œuvre les étapes du procédé selon l'invention.

Un dernier objet de l'invention concerne un support d'enregistrement lisible par ordinateur comprenant des instructions qui, lorsqu'elles sont exécutées par un ordinateur, conduisent celui-ci à mettre en œuvre les étapes du procédé suivant l'invention.

### Brève description des dessins

D'autres avantages et caractéristiques ressortiront mieux de la description qui va suivre d'une unique variante d'exécution, donnée à titre d'exemple non limitatif, du procédé conforme à l'invention, en référence aux dessins annexés sur lesquels :
[Fig.1] est une représentation schématique, vue de dessus, d'une installation de formage mettant en œuvre le procédé suivant l'invention,
[Fig.2] est une vue de côté qui représente un corps creux destinée à alimenter l'installation de formage de la [Fig.1],
[Fig.3] est une représentation schématique des différentes étapes de formage d'un récipient à travers l'unité de formage de la [Fig.1],
[Fig.4] est une vue en coupe transversale de l'unité de conditionnement thermique des corps creux de l'unité de formage de la [Fig.1],
[Fig.5] est une représentation schématique de l'étape de mesure de l'épaisseur de la paroi du récipient formé à différentes hauteurs,
[Fig.6] est un ordinogramme des différentes étapes du procédé de régulation de l'unité de formage de récipients suivant l'invention,
[Fig.7] est un ordinogramme des différentes étapes d'étalonnage du procédé de régulation de l'unité de formage de récipients suivant l'invention.

### Mode de réalisation de l'invention

Dans la suite de la description du procédé pour fabriquer des récipients en matières thermoplastiques par moulage avec soufflage ou étirage-soufflage d'un corps creux suivant l'invention, les mêmes références numériques désignent les mêmes éléments. Les différentes vues ne sont pas nécessairement tracées à l'échelle.

Dans la suite de la description, des éléments présentant une structure identique ou des fonctions analogues seront désignés par des mêmes références.

Dans la suite de la description, on adoptera, à titre non limitatif des orientations longitudinale dirigée selon le sens de déplacement du corps creux, verticale et transversale indiquées par le trièdre "L,V,T" des figures.

Par la suite, le terme "organe de maintien" signifie organe de préhension ou organe de support d'un corps creux qui est susceptible de transporter le corps creux d'un point à un autre.

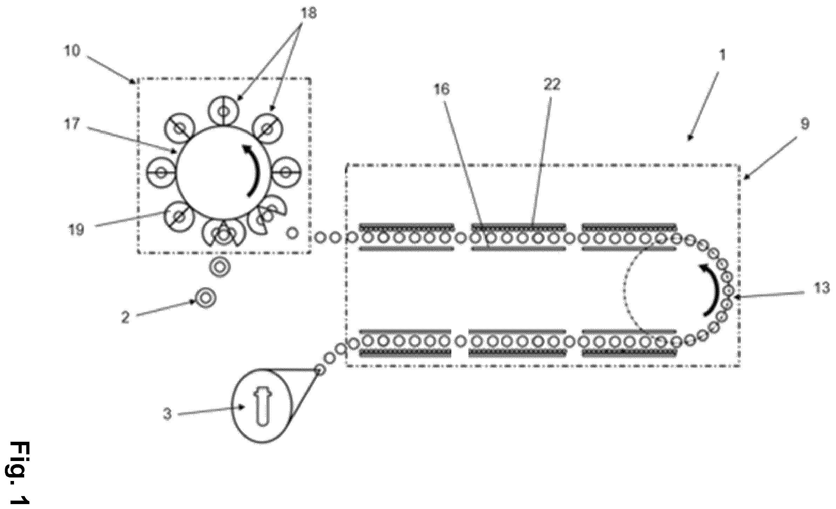

On a représenté à la [Fig.1], de manière schématique, une installation 1 de formage de récipients 2 finaux en matériau thermoplastique, tel que du "PET" (polyéthylène téréphtalate) recyclé ou non ou du "PP" (polypropylène), à partir de corps creux 3. Les corps creux 3 sont généralement réalisées auparavant par injection moulage. Ces corps creux 3 sont généralement froids lorsqu'ils sont délivrés à l'entrée de l'installation 1 de formage.

Dans la suite de la description, le terme générique "corps creux" sera utilisé pour désigner indifféremment une préforme, un récipient en cours de formage ou un récipient final.

Dans la suite de la description, les corps creux 3 et les récipients 2 se déplacent dans l'installation de production le long d'un trajet de circulation depuis l'amont vers l'aval. Les corps creux 3 sont déplacés en file le long d'un trajet de chauffe par des moyens de convoyage qui seront détaillés par la suite.

De manière non limitative, les récipients 2 sont ici des bouteilles. Le matériau thermoplastique est par exemple ici formé par du polyéthylène téréphtalate, désigné par la suite sous son acronyme "PET".

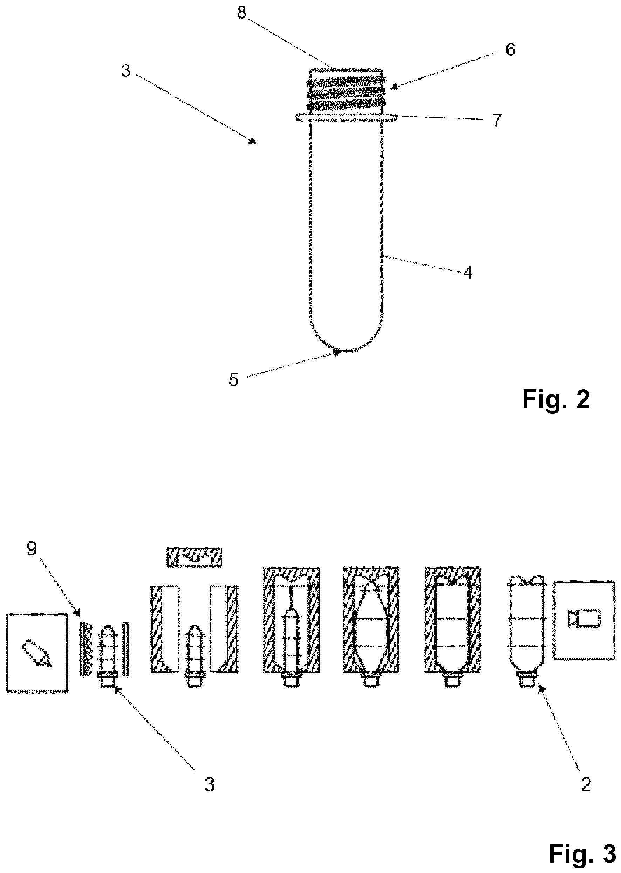

En référence à la [Fig.2], chaque corps creux 3 présente un axe "X" principal représenté verticalement sur ladite [Fig.2]. Chaque corps creux 3 présente un corps 4 sensiblement cylindrique à paroi tubulaire fermé à l'une de ses extrémités axiales par un fond 5, et qui est ouvert à son autre extrémité par un col 6, lui aussi tubulaire. Le col 6 est délimité vers le bas par une collerette 7 et vers le haut par un bord d'extrémité supérieur appelé buvant 8.

Le col 6 présente généralement sa forme définitive tandis que le corps 4 du corps creux 3 est destiné à subir une déformation relativement importante pour former le récipient 2 final lors d'une étape de formage.

Les corps creux 3 sont ici venues de matière en "PET" recyclé ou non ou en "PP", c'est à dire que le corps creux 3 est réalisée par moulage d'un unique matériau thermoplastique de composition déterminée.

Il va de soi que les corps creux 3 pourront être venus de matière en tout autre polymère tel que du polyéthylène furanoate (PEF), de l'acide polylactique (PLA), des polyhydroxyalcanoates (PHA), du polyéthylène haute densité (HDPE), ou similaire ou une combinaison de ces polymères sous une forme dite multicouches, avec ou sans additif(s), sans pour autant sortir du cadre de l'invention.

Parmi les caractéristiques susceptibles de varier d'un lot de corps creux 3 à un autre, on notera par exemple l'épaisseur de la paroi du corps 4 du corps creux 3, ou encore le taux d'absorption de rayonnement infrarouge par le matériau thermoplastique.

En référence à la [Fig.1], l'installation de fabrication de récipients comprend au moins une unité de conditionnement thermique 9 et une unité de formage 10.

L'unité de conditionnement thermique 9 aussi appelée four permet de chauffer une succession de corps creux 3 à une température de référence. La température de référence est choisie pour que le corps 4 de chaque corps creux 3 en sortie d'unité de conditionnement thermique 9 soit dans un état malléable permettant une déformation du corps 4 du corps creux 3 chauffé afin de former le récipient 2 dans l'unité de formage 10. La température de référence est comprise entre la température de transition vitreuse et la température de cristallisation de la matière plastique du corps creux 3. Dans le cas du PET, la température de référence est, par exemple, voisine de 110°. La valeur de la température de référence peut varier en fonction du produit avec lequel le récipient 2 va être rempli ou en fonction de la technique de remplissage du récipient. Ainsi, la température de référence est différente pour un remplissage à chaud ou pour un produit carbonaté par exemple.

Selon le mode de réalisation représenté sur la [Fig.1], l'unité de conditionnement thermique 9 est un four à défilement, dans lequel les corps creux 3 sont transportées pour être exposées à une pluralité de sources 12 de rayonnement de chauffage.

A cet effet, l'unité de conditionnement thermique 9 comprend un moyen de convoyage 13 des corps creux 3 au travers de l'unité de conditionnement thermique 9 selon un trajet de chauffage s'étendant entre une entrée et une sortie de l'unité de conditionnement thermique 9. Ledit moyen de convoyage 13 comprend usuellement une succession de dispositifs de préhension, chacun étant apte à supporter un corps creux 3, montés sur une chaîne, se déplaçant le long du trajet de chauffe dans l'unité de conditionnement thermique 9.

Chaque dispositif de préhension est, par exemple, apte à recevoir un corps creux 3 par emmanchement du col 6 sur une tournette, chaque tournette étant, par exemple, mobile en rotation par rapport à la chaîne autour d'un axe de rotation confondu avec l'axe principal X d'un corps creux 3 lorsque celle-ci est supportée par la tournette.

L'unité de conditionnement thermique 9 comprend également une cavité de chauffe qui comprend deux parois latérales face à face et au moins l'une de ces parois étant celle qui supporte plusieurs sources 12 de rayonnement disposées les unes au-dessus des autres et les unes à côté des autres en regard des corps creux.

En d'autres termes, l'unité de conditionnement thermique 9 comprend une pluralité de sources 12 de rayonnement répartis le long du trajet de chauffe et selon une hauteur correspondant sensiblement à la hauteur des corps creux de sorte que toute la hauteur du corps 4 de chaque corps creux 3 est exposée aux sources 12 de rayonnement sur le trajet du corps creux dans l'unité de conditionnement thermique 9. En faisant tourner les corps creux 3 autour de leur axe principal X, les tournettes permettent d'exposer uniformément tout le corps 4 des corps creux aux sources 12 de rayonnement. Dans ce mode de réalisation particulier, les sources 12 de rayonnement sont réparties sur un côté seulement de ce trajet, et une paroi 16 réfléchissante est disposée de l'autre côté du trajet de chauffage pour réfléchir la chaleur vers les corps creux 3.

Dans un autre mode de réalisation non représentées, les sources 12 de rayonnement peuvent être réparties de part et d'autre du trajet de chauffage sans pour autant sortir du cadre de l'invention.

Il convient également de noter que les sources 12 de rayonnement sont agencées, le cas échéant, pour ne pas soumettre le col 6 à la chaleur émise par les sources 12 de rayonnement. En effet, comme indiqué précédemment, seul le corps 4 du corps creux 3 est formé pour produire le récipient 2. Par conséquent, le col 6 ne doit pas être déformé au cours du formage et ne doit pas être chauffé. Pour éviter le chauffage du col 6, l'unité de traitement thermique 9 peut comprendre un dispositif de ventilation positionné au droit des cols 6 des corps creux 3 pour évacuer la chaleur susceptible d'être absorbée par lesdits cols 6.

Il est bien évident que les sources 12 de rayonnement pourront être substituées par tout autre moyen de chauffe bien connu de l'homme du métier tel que des diodes VCEL émettant un rayonnement électromagnétique monochromatique ou pseudo-monochromatique dans l'infrarouge ou bien encore des sources micro-ondes par exemple sans pour autant sortir du cadre de l'invention.

Puis, une fois que le corps creux 3 a été conditionné thermiquement à travers l'unité de conditionnement thermique 9, il est transféré à l'unité de formage 10 pour y être formé.

Ladite unité de formage 10 de récipients 2 à partir de corps creux 3, en référence à la [Fig.1], se compose d'une roue de formage 17 déplaçant en rotation une pluralité de postes de soufflage 18 d'une entrée à une sortie, à laquelle une succession de récipients 2 sont formés à partir des corps creux 3, puis sont extraits, comme représentée sur la [Fig.1]. L'axe de rotation de la roue de formage 17 est, par exemple, sensiblement parallèle à l'axe principal X des corps creux 3 lorsqu'elles sont transportées par la roue de formage 17.

Chaque poste de soufflage 18 comprend un moule 19 formant une cavité de moulage présentant la forme du récipient 2 à former et agencé pour recevoir un corps creux 3 de façon que le corps 4 du corps creux 3 s'étende dans la cavité de moulage.

On observera que l'installation 1 comprend également une ou plusieurs roues de transfert, non représentées sur les figures, à l'entrée de l'unité de conditionnement thermique 9 et entre la sortie de l'unité de conditionnement thermique 9 et l'unité de formage, lesdites roues de transfert comprenant usuellement des organes de maintien de la première roue de transfert qui sont formés par des pinces de préhension. Ainsi, en référence à la [Fig.3], chaque corps creux 3 subit différentes étapes de traitement lors de son parcours le long du trajet de production, et notamment une étape de chauffage dans l'unité de traitement thermique 9, suivie d'une étape de formage dans l'unité de formage 10.

De manière générale, une telle installation 1 de formage est susceptible de produire des récipients 2 finaux de formats différents. A cet effet, les postes de soufflage 18 équipant l'unité de formage 10 sont munis de moules interchangeables. Ainsi, il est possible de modifier la forme du récipient final produit.

En fonction du format de récipient final sélectionné, l'installation 1 sera alimentée avec des corps creux 3 présentant des caractéristiques intrinsèques adaptées.

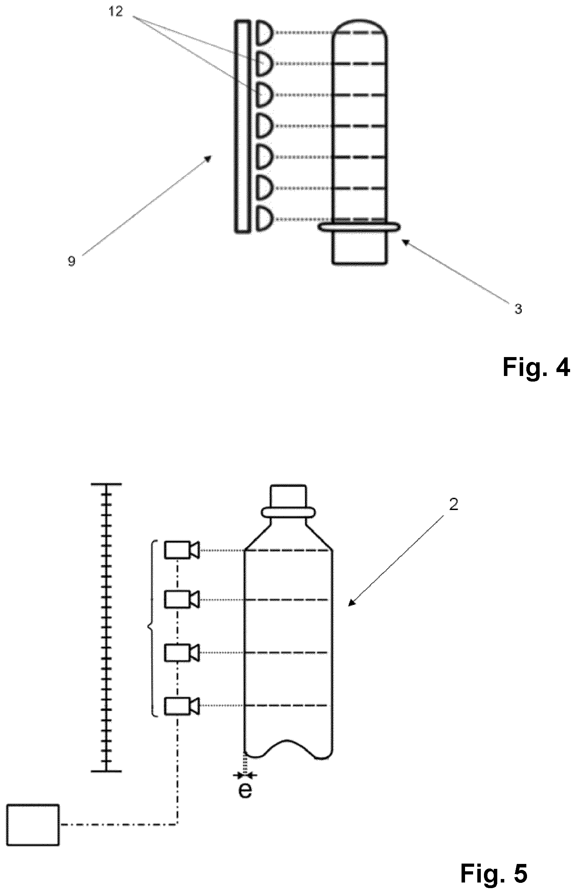

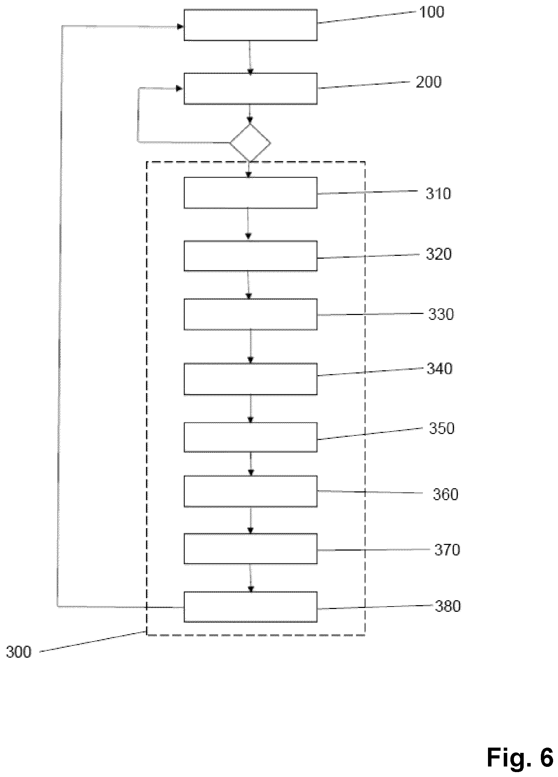

Selon un exemple particulier de réalisation du procédé de commande de l'installation 1 de formage de corps creux permettant de corriger, à partir d'un process donné, toute dérive entrainant des variations d'épaisseurs mesurées vis-à-vis des consignes déterminées des paramètres de traitement des stations de traitement en fonction des mesures effectuées directement sur les récipients à la sortie de la station de formage, comme cela est illustré schématiquement aux figures 5 et 6. On observera que l'épaisseur du récipient est mesurée à au moins deux hauteurs différentes par tout moyen approprié bien connu de l'homme du métier tel que par des capteurs à interférométrie par exemple.

Ainsi, le procédé consiste à mesurer l'épaisseur de la paroi desdits récipients à la sortie du moule (étape 100), à au moins deux hauteurs différentes ; puis à comparer (étape 200) les mesures des épaisseurs avec des valeurs de consigne déterminées pour chaque hauteur des récipients et, si l'écart des mesures des épaisseurs avec les valeurs de consigne déterminées est supérieur à un seuil déterminé, à modifier (étape 300) au moins un des paramètres de pilotage, le ou lesdits paramètres de pilotage modifié(s) étant sélectionné(s) au moins en calculant les effets théoriques de la variation pour chaque paramètre sur les épaisseurs puis en sélectionnant le ou les paramètres induisant le plus petit écart entre les valeurs mesurées et les valeurs théoriques d'épaisseurs et les précédentes étapes sont répétées jusqu'à ce que l'écart des mesures des épaisseurs avec les valeurs de consigne déterminées est inférieur audit seuil déterminé.

Plus précisément, en référence à la [Fig.6], l'étape de modification (300) d'au moins un des paramètres de pilotage comprend par exemple au moins les étapes suivantes de :
- définition (310), pour chaque paramètre, d'un coefficient de référence optimal attribué à chaque zone d'épaisseur de la paroi des récipients ;
- mémorisation (320) des limites inférieure et supérieure ainsi que des échelles pour chacun desdits paramètres ;
- calcul d'un ajustement (330) de chaque paramètre en fonction du coefficient de référence optimal préalablement défini ;
- un éventuel recalcul (340) des ajustements si les ajustements calculés ne sont pas dans lesdites limites ;
- calcul des corrections théoriques (350) pour chaque zone d'épaisseur en fonction des ajustements calculés et des échelles ;
- calcul de l'écart théorique (360) d'épaisseur des récipients en fonction des corrections théoriques calculées pour chaque zone d'épaisseur ;
- addition, pour chaque paramètre, desdits écarts théoriques calculés (370) ; et
- sélection d'au moins un paramètre (380) présentant les valeurs d'écart cumulées les plus faibles.

Préalablement à l'étape de sélection d'au moins un paramètre, il comporte une étape de hiérarchisation des paramètres en fonction desdits écarts théoriques calculés. Lesdits paramètres sont hiérarchisés de manière croissante, de la valeur d'écart cumulé la plus faible à la valeur d'écart cumulé la plus grande.

De préférence, les corrections théoriques calculées nulles sont exclues et l'addition des écarts théoriques calculés est réalisée en valeur absolue.

De manière avantageuse, l'étape de sélection du paramètre est réalisée après le calcul d'une nouvelle moyenne des épaisseurs pour chaque zone et/ou que la combinaison des écarts pour chaque zone d'épaisseur a changé. De cette manière, la régulation suivant l'invention permet de corriger les éventuels écarts en temps réel sans être obligé d'arrêter l'installation de production et, ce faisant, de maintenir la qualité des récipients produits. Une nouvelle moyenne des épaisseurs pour chaque zone est calculée à une fréquence prédéterminée. Par exemple, la nouvelle moyenne des épaisseurs pour chaque zone est calculée toutes les m bouteilles sorties du moule et pour lesquelles les épaisseurs ont été mesurées, m étant un nombre entier compris entre 30 et 80. Par exemple, m est égal à 50. Toutefois, il est bien évident que m pourra être un nombre entier quelconque sans pour autant sortir du cadre de l'invention.

On observera que, si après n corrections sur ledit paramètre sélectionné, n étant un nombre prédéterminé supérieur ou égal à 1, l'écart des mesures des épaisseurs avec les valeurs de consigne déterminées est supérieur à un seuil déterminé, on sélectionne alors un nouveau paramètre. Ledit nouveau paramètre i+1 sélectionné correspond au paramètre i+1 hiérarchisé.

Par ailleurs, de manière avantageuse les coefficients de référence optimaux attribués à chaque zone d'épaisseur de la paroi des récipients sont variables et sont calculés à chaque modification d'un paramètre. Ledit calcul du coefficient de référence optimal attribué à chaque zone d'épaisseur de la paroi des récipients est obtenu à partir du calcul de l'effet réel de l'ajustement sur chaque zone d'épaisseur de la paroi des récipients.

De préférence, ledit calcul comporte au moins des étapes suivantes de :
- Calcul d'un offset du paramètre de soufflage et/ou de chauffe en multipliant ledit coefficient initial par la dérive d'épaisseur ;
- Détermination du nouveau coefficient en fonction de l'offset appliqué au paramètre et de l'effet réel mesuré sur la répartition matière de chaque zone d'épaisseur

On observera que de tels coefficients de référence optimaux variables permettent de personnaliser ces coefficients en fonction de l'environnement, de la machine, de la résine des corps creux, etc.

Ledit paramètre consiste en un paramètre de l'unité de chauffe tel que la puissance de chauffe à une hauteur déterminée du corps creux et/ou la puissance d'une ventilation assurant l'évacuation d'une partie de la chaleur dans l'unité de chauffage et/ou le profil de température de la chauffe préférentielle, et/ou ledit paramètre consiste en un paramètre de l'unité de formage tel que la valeur de la pression de pré-soufflage et/ou le départ du pré-soufflage et/ou le débit de pré-soufflage et/ou la vitesse de la tige d'étirage et/ou la pression de soufflage.

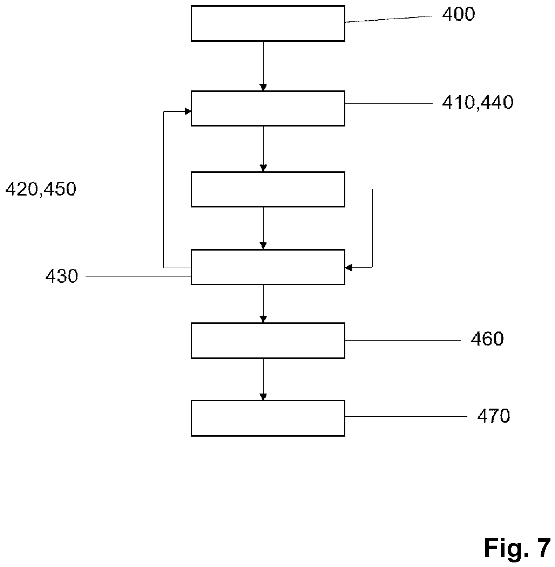

Afin d'adapter le procédé de régulation à chaque process, le procédé suivant l'invention comporte avantageusement une étape préalable dite d'étalonnage, en référence à la [Fig.7], qui comporte les étapes suivantes. On entend par « process », le procédé de fabrication d'un type particulier de récipient à partir d'un type particulier de corps creux et/ou d'un type particulier de résine.

Ladite étape d'étalonnage comprend une première étape (400) de productions de récipients à partir de premiers paramètres de pilotage pour produire des récipients conformes ; puis une étape (410) de mesure de l'épaisseur de la paroi desdits récipients à la sortie du moule, à au moins deux hauteurs différentes, correspondant à la production de récipients à partir desdits premiers paramètres de pilotage, ladite mesure de l'épaisseur correspondant à une épaisseur de référence qui est enregistrée dans une unité de mémoire dans une étape (420).

Ensuite, dans une étape (430), chaque paramètre de pilotage est modifié. Ladite modification du paramètre de pilotage est avantageusement obtenue à partir d'un coefficient correcteur prédéterminé associé audit paramètre de pilotage. Cette modification de chaque paramètre de pilotage est effectuée en modifiant un par un chaque paramètre de pilotage à partir d'un coefficient correcteur prédéterminé associé audit paramètre de pilotage. De manière alternative, chaque paramètre de pilotage est modifié simultanément avec au moins un autre paramètre de pilotage.

Par ailleurs, chaque paramètre de pilotage est de préférence modifié suivant une valeur incrémentale ou décrémentale prédéterminée.

Après chaque modification d'un paramètre de pilotage, on mesure l'épaisseur de la paroi desdits récipients à la sortie du moule, à au moins deux hauteurs différentes, dans une étape (440) et on enregistre les épaisseurs de la paroi desdits récipients à la sortie du moule pour chaque paramètre modifié de pilotage modifié dans ladite unité de mémoire (étape (450)).

Ensuite, dans une étape (460), on compare lesdites épaisseurs mesurées enregistrées avec ladite épaisseur de référence ou avec une épaisseur théorique, l'épaisseur théorique étant l'épaisseur qu'on aurait dû obtenir après modifications des paramètres, de préférence en suivant des coefficients de correction pré-déterminés, et finalement, dans une étape (470) on sélectionne le ou les paramètres de pilotage qui procure la variation d'épaisseur correspondant à l'épaisseur souhaitée de la paroi du récipient ou on modifie les coefficients de correction prédéterminés, associés aux paramètres de pilotage, de telle sorte que les épaisseurs mesurées après modification du ou des paramètres de pilotage correspondent aux épaisseurs théoriques que l'on aurait dû obtenir avec les coefficient pré-déterminés précédents.

On comprend bien que, pour chaque process, à la première mise en route, on met l'installation de formage de récipients en production avec un process spécifique validé, puis on modifie automatiquement légèrement chaque paramètre du process et on enregistre les épaisseurs qui en résultent. On peut ainsi personnaliser l'algorithme de pilotage de l'installation pour chaque process et, ainsi, en cas de déviation d'une ou plusieurs épaisseurs, l'algorithme pourra choisir de manière optimale le ou les paramètres à modifier et la valeur des coefficients correcteur associés à chaque paramètre de pilotage pour retrouver des épaisseurs dans les spécifications du process de fabrication des récipients.

Selon une variante d'exécution du procédé suivant l'invention, ladite étape d'étalonnage comprend une première étape (400) de productions de récipients à partir de premiers paramètres de pilotage pour produire des récipients conformes ; puis une étape (410) de mesure de l'épaisseur de la paroi desdits récipients à la sortie du moule, à au moins deux hauteurs différentes, correspondant à la production de récipients à partir desdits premiers paramètres de pilotage, ladite mesure de l'épaisseur correspondant à une épaisseur de référence qui est enregistrée dans une unité de mémoire dans une étape (420).

Ensuite, dans une étape (430), chaque paramètre de pilotage est modifié. Dans cette variante d'exécution, la modification ne se fait pas comme précédemment à partir d'un coefficient correcteur mais de manière empirique. Par ailleurs, chaque paramètre de pilotage peut être modifié simultanément avec au moins un autre paramètre de pilotage.

De plus, chaque paramètre de pilotage est de préférence modifié suivant une valeur incrémentale ou décrémentale prédéterminée.

Après chaque modification d'un paramètre de pilotage, on mesure l'épaisseur de la paroi desdits récipients à la sortie du moule, à au moins deux hauteurs différentes, dans une étape (440) et on enregistre les épaisseurs de la paroi desdits récipients à la sortie du moule pour chaque paramètre modifié de pilotage modifié dans ladite unité de mémoire (étape (450)).

Ensuite, dans une étape (460), on compare lesdites épaisseurs mesurées enregistrées avec les épaisseurs obtenues sans modification du ou des paramètres et finalement, dans une étape (470) on détermine un coefficient de correction, pour une épaisseur à une hauteur déterminée, de chaque paramètre de pilotage, ledit coefficient de correction procurant la variation d'épaisseur correspondant à l'épaisseur souhaitée de la paroi du récipient à la hauteur déterminée.

Ainsi, le procédé de régulation tel que décrit précédemment, après l'étape préalable dite d'étalonnage suivant l'invention, comporte au moins les étapes suivantes de :
Mesure de l'épaisseur de la paroi desdits récipients à la sortie du moule, à au moins deux hauteurs différentes ;
De comparaison des mesures des épaisseurs avec des valeurs de consigne déterminées pour chaque hauteur des récipients ;
De, si l'écart des mesures des épaisseurs avec les valeurs de consigne déterminées est supérieur à un seuil déterminé, modification d'au moins un des paramètres de pilotage, le ou lesdits paramètres de pilotage modifié(s) et leurs coefficients correcteurs associés étant sélectionné(s) parmi au moins un des paramètres de pilotage procurant la variation d'épaisseur de la paroi des récipients la plus pertinente vis-à-vis de l'écart d'épaisseur mesuré de la paroi des récipients lors de l'étape d'étalonnage et/ou en calculant les effets théoriques de la variation pour chaque paramètre sur les épaisseurs, lesdits effets théoriques de la variation pour chaque paramètre définissant une épaisseur théorique ;
De sélection du ou des paramètres induisant le plus petit écart entre les valeurs mesurées et les valeurs théoriques d'épaisseurs.

Les précédentes étapes sont répétées jusqu'à ce que les écarts des mesures des épaisseurs avec les valeurs de consigne déterminées soient inférieurs audit seuil déterminé.

On observera que l'on entend par « la variation d'épaisseur de la paroi des récipients la plus pertinente » comme étant la variation d'épaisseur correspondant à l'épaisseur souhaitée de la paroi du récipient.

Par ailleurs, de préférence, la troisième étape de modification d'au moins un des paramètres de pilotage comprend au moins les étapes suivantes de définition, pour chaque paramètre, d'un coefficient de référence optimal choisi parmi des coefficients de références attribués à chaque zone d'épaisseur de la paroi des récipients ; de mémorisation des limites inférieure et supérieure ainsi que des échelles pour chacun desdits paramètres ; de calcul d'un ajustement de chaque paramètre en fonction dudit coefficient de référence optimal préalablement défini ; de calcul des corrections théoriques pour chaque zone d'épaisseur en fonction des ajustements calculés et des échelles ; de calcul de l'écart théorique d'épaisseur des récipients en fonction des corrections théoriques calculées pour chaque zone d'épaisseur ; d'addition, pour chaque paramètre, desdits écarts théoriques calculés ; et de sélection d'au moins un paramètre présentant la valeur d'écart cumulé la plus faible.

Par ailleurs, préalablement à l'étape de sélection d'au moins un paramètre, il comporte une étape de hiérarchisation des paramètres en fonction desdits écarts théoriques calculés. Ainsi, lesdits paramètres sont hiérarchisés de manière croissante, de la valeur d'écart cumulé la plus faible à la valeur d'écart cumulé la plus grande.

De préférence, après l'étape de calcul des ajustements et préalablement à l'étape de calcul des corrections théoriques, le procédé suivant l'invention comporte une étape additionnelle de recalcul des ajustements si les ajustements calculés ne sont pas dans lesdites limites.

Bien évidemment, lesdites corrections théoriques calculées nulles sont exclues et l'addition des écarts théoriques calculés est réalisée en valeur absolue.

Par ailleurs, de préférence, l'étape de sélection du paramètre est réalisée après le calcul d'une nouvelle moyenne des épaisseurs pour chaque zone et/ou après que la combinaison des écarts pour chaque zone d'épaisseur a changé.

Ladite nouvelle moyenne des épaisseurs pour chaque zone est calculée à une fréquence prédéterminée.

De manière avantageuse, le procédé suivant l'invention comporte une étape de modification des coefficients de correction prédéterminés de l'algorithme pour que les épaisseurs mesurées après modification du ou des paramètres de pilotage correspondent aux épaisseurs théoriques que l'on aurait dû obtenir avec les coefficients pré-déterminés précédents.

Le procédé de régulation et les étapes d'étalonnage dudit procédé se présentent sous la forme d'un algorithme, i.e. un produit programme d'ordinateur comprenant une séquence d'instructions qui, lorsque le programme est exécuté par un ordinateur, conduit celui-ci à mettre en œuvre les étapes du procédé selon l'invention, le programme d'ordinateur étant enregistré sur un support tel qu'une mémoire par exemple.

Il va de soi que, après l'étape d'étalonnage suivant l'invention décrite précédemment, tout type de procédé de fabrication à partir de différents paramètres dits de pilotage tels que la température de chauffe des corps creux dans le four, la pression de soufflage dans le moule et/ou la pression de pré-soufflage et/ou le débit de pré-soufflage et/ou la vitesse de la tige d'étirage par exemple pourra être utilisé sans pour autant sortir du cadre de l'invention.

Enfin, il est bien évident que les exemples que l'on vient de donner ne sont que des illustrations particulières en aucun cas limitatives quant aux domaines d'application de l'invention.

## Revendications

1. Procédé pour fabriquer des récipients en matières thermoplastiques par moulage avec soufflage ou étirage-soufflage d'un corps creux préalablement chauffé dans un four puis disposé dans un moule constitué de deux demi-moules délimitant une cavité de moulage, ledit corps creux étant soufflé dans le moule, avec éventuellement une étape de pré-soufflage, lesdites étapes de chauffage des corps creux, de pré-soufflage et de soufflage étant pilotées par une unité de contrôle à partir de différents paramètres dits de pilotage tels que la température de chauffe des corps creux dans le four, la pression de soufflage dans le moule et/ ou la pression de pré-soufflage et/ou le débit de pré-soufflage et/ou la vitesse de la tige d'étirage par exemple, **caractérisé en ce qu'**il comprend une étape préalable dite d'étalonnage qui comporte au moins les étapes suivantes de :
i) production de récipients à partir de premiers paramètres de pilotage pour produire des récipients dits conformes ;
ii) mesure de l'épaisseur de la paroi desdits récipients à la sortie du moule, à au moins deux hauteurs différentes, correspondant à la production de récipients à partir desdits premiers paramètres de pilotage, ladite mesure de l'épaisseur correspondant à une épaisseur de référence ;
iii) enregistrement de ladite épaisseur de référence dans une unité de mémoire ;
iv) modification d'au moins un paramètre de pilotage ;
v) mesure de l'épaisseur de la paroi desdits récipients à la sortie du moule, à au moins deux hauteurs différentes, après la modification du ou desdits paramètres de pilotage ;
vi) enregistrement des épaisseurs de la paroi desdits récipients à la sortie du moule pour chaque paramètre de pilotage modifié dans ladite unité de mémoire ;
vii) comparaison desdites épaisseurs mesurées enregistrées avec les épaisseurs obtenues sans modification du ou des paramètres;
viii) détermination d'un coefficient de correction, pour une épaisseur à une hauteur déterminée, de chaque paramètre, ledit coefficient de correction procurant la variation d'épaisseur correspondant à l'épaisseur souhaitée de la paroi du récipient à la hauteur déterminée.

2. Procédé suivant la revendication précédente **caractérisé en ce que** l'étape préalable d'étalonnage comporte au moins les étapes suivantes de :
i) production de récipients à partir de premiers paramètres de pilotage pour produire des récipients dits conformes ;
ii) mesure de l'épaisseur de la paroi desdits récipients à la sortie du moule, à au moins deux hauteurs différentes, correspondant à la production de récipients à partir desdits premiers paramètres de pilotage, ladite mesure de l'épaisseur correspondant à une épaisseur de référence ;
iii) enregistrement de ladite épaisseur de référence dans une unité de mémoire ;
iv) modification d'au moins un paramètre de pilotage, ladite modification étant réalisée à partir d'un coefficient correcteur prédéterminé associé audit paramètre de pilotage ;
v) mesure de l'épaisseur de la paroi desdits récipients à la sortie du moule, à au moins deux hauteurs différentes, après la modification du ou desdits paramètres de pilotage ;
vi) enregistrement des épaisseurs de la paroi desdits récipients à la sortie du moule pour chaque paramètre modifié de pilotage modifié dans ladite unité de mémoire ;
vii) comparaison desdites épaisseurs mesurées enregistrées avec les épaisseurs théoriques qu'on aurait dû obtenir après modifications du ou desdits paramètres en suivant les coefficients de correction pré-déterminés ;
viii) modification des coefficients de correction prédéterminés de telle sorte que les épaisseurs mesurées après modification du ou des paramètres de pilotage correspondent aux épaisseurs théoriques que l'on aurait dû obtenir avec les coefficient pré-déterminés précédents

3. Procédé suivant la revendication 2 **caractérisé en ce que**, après l'étape préalable dite d'étalonnage, il comporte au moins les étapes suivantes de :
a) mesure de l'épaisseur de la paroi desdits récipients à la sortie du moule, à au moins deux hauteurs différentes ;
b) comparaison des mesures des épaisseurs avec des valeurs de consigne déterminées pour chaque hauteur des récipients ;
c) si l'écart des mesures des épaisseurs avec les valeurs de consigne déterminées est supérieur à un seuil déterminé, modification d'au moins un des paramètres de pilotage, le ou lesdits paramètres de pilotage modifié(s) et leurs coefficients correcteurs associés étant sélectionné(s) parmi au moins un des paramètres de pilotage procurant la variation d'épaisseur de la paroi des récipients la plus pertinente vis-à-vis de l'écart d'épaisseur mesuré de la paroi des récipients lors de l'étape d'étalonnage et/ou en calculant les effets théoriques de la variation pour chaque paramètre sur les épaisseurs, lesdits effets théoriques de la variation pour chaque paramètre définissant une épaisseur théorique, puis en sélectionnant le ou les paramètres induisant le plus petit écart entre les valeurs mesurées et les valeurs théoriques d'épaisseurs ;
d) les étapes a) à c) sont répétées jusqu'à ce que les écarts des mesures des épaisseurs avec les valeurs de consigne déterminées soient inférieurs audit seuil déterminé.

4. Procédé suivant la revendication précédente caractérisé en ce l'étape c) comprend au moins les étapes suivantes de :
- définition, pour chaque paramètre, d'un coefficient de référence optimal choisi parmi des coefficients de références attribués à chaque zone d'épaisseur de la paroi des récipients ;
- mémorisation des limites inférieure et supérieure ainsi que des échelles pour chacun desdits paramètres ;
- calcul d'un ajustement de chaque paramètre en fonction dudit coefficient de référence optimal préalablement défini ;
- calcul des corrections théoriques pour chaque zone d'épaisseur en fonction des ajustements calculés et des échelles ;
- calcul de l'écart théorique d'épaisseur des récipients en fonction des corrections théoriques calculées pour chaque zone d'épaisseur ;
- addition, pour chaque paramètre, desdits écarts théoriques calculés ; et
- sélection d'au moins un paramètre présentant les valeurs d'écart cumulées les plus faibles.

5. Procédé suivant la revendication 4 **caractérisé en ce que**, préalablement à l'étape de sélection d'au moins un paramètre, il comporte une étape de hiérarchisation des paramètres en fonction desdits écarts théoriques calculés.

6. Procédé suivant la revendication 5 **caractérisé en ce que** lesdits paramètres sont hiérarchisés de manière croissante, de la valeur d'écart cumulé la plus faible à la valeur d'écart cumulé la plus grande.

7. Procédé suivant l'une quelconque des revendications 4 à 6 **caractérisé en ce que**, après l'étape de calcul des ajustements et préalablement à l'étape de calcul des corrections théoriques, il comporte une étape additionnelle de recalcul des ajustements si les ajustements calculés ne sont pas dans lesdites limites.

8. Procédé suivant l'une quelconque des revendications 4 à 7, **caractérisé en ce que** les corrections théoriques calculées nulles sont exclues.

9. Procédé suivant l'une quelconque des revendications 4 à 8 **caractérisé en ce que** l'addition des écarts théoriques calculés est réalisée en valeur absolue.

10. Procédé suivant l'une quelconque des revendications 4 à 9 **caractérisé en ce que** l'étape de sélection du paramètre est réalisée après le calcul d'une nouvelle moyenne des épaisseurs pour chaque zone et/ou que la combinaison des écarts pour chaque zone d'épaisseur a changé.

11. Procédé suivant la revendication 10 **caractérisé en ce qu'**une nouvelle moyenne des épaisseurs pour chaque zone est calculée à une fréquence prédéterminée.

12. Procédé suivant l'une quelconque des revendications 4 à 11 **caractérisé en ce qu'**il comporte une étape de modification des coefficients de correction prédéterminés de l'algorithme pour que les épaisseurs mesurées après modification du ou des paramètres de pilotage correspondent aux épaisseurs théoriques que l'on aurait dû obtenir avec les coefficients pré-déterminés précédents.

13. Procédé suivant l'une quelconque des revendications 1 à 12 **caractérisé en ce que**, lors de ladite étape d'étalonnage, chaque paramètre de pilotage est modifié un par un.

14. Procédé suivant l'une quelconque des revendications 1 à 12 **caractérisé en ce que**, lors de ladite étape d'étalonnage, chaque paramètre de pilotage est modifié simultanément avec au moins un autre paramètre de pilotage.

15. Procédé suivant l'une quelconque des revendications 1 à 14 **caractérisé en ce que**, lors de ladite étape d'étalonnage, chaque paramètre de pilotage est modifié suivant une valeur incrémentale ou décrémentale prédéterminée.

16. Produit programme d'ordinateur comprenant une séquence d'instructions qui, lorsque le programme est exécuté par un ordinateur, conduit celui-ci à mettre en œuvre les étapes du procédé selon l'une quelconque des revendications 1 à 15.

17. Dispositif de traitement de données comprenant des moyens de mettre en œuvre les étapes du procédé selon l'une quelconque des revendications 1 à 15.

18. Support d'enregistrement lisible par ordinateur comprenant des instructions qui, lorsqu'elles sont exécutées par un ordinateur, conduisent celui-ci à mettre en œuvre les étapes du procédé selon l'une quelconque des revendications 1 à 15.
